# EUROPEAN PATENT SPECIFICATION

(11) **EP 3 605 396 B1**
(45) Date of publication and mention of the grant of the patent: **22.03.2023**
(21) Application number: 17903546.4
(22) Date of filing: 08.11.2017
(51) Int. Cl.: G06K 13/06, G06K 7/08, G07D 9/00, G06K 7/10, G07F 19/00, G06K 13/08

(54) **CARD PROCESSING DEVICE AND AUTOMATED TRANSACTION DEVICE**
VORRICHTUNG ZUR KARTENVERARBEITUNG UND VORRICHTUNG FÜR AUTOMATISCHE TRANSAKTIONEN
DISPOSITIF DE TRAITEMENT DE CARTE ET DISPOSITIF DE TRANSACTION AUTOMATISÉE

(30) Priority: 31.03.2017 JP 2017069585
(43) Date of publication of application: 05.02.2020
(73) Proprietor: Hitachi Channel Solutions, Corp., Tokyo 141-8576 (JP)
(72) Inventor: YOSHII Masahiro, Tokyo 141-8576 (JP); TADAMASA Akihiro, Tokyo 141-8576 (JP); SUZUKI Hiroyuki, Tokyo 141-8576 (JP)
(74) Representative: MERH-IP Matias Erny Reichl Hoffmann Patentanwälte PartG mbB
(86) International application number: PCT/JP2017/040197
(87) International publication number: WO 2018/179565

(56) References cited:
- EP-A1- 1 679 640
- JP-A- 2004 171 205
- JP-A- 2007 164 459
- JP-A- 2008 015 666
- JP-A- 2010 170 379
- JP-A- 2015 153 132
- TW-A- 200 915 234
- US-A1- 2007 057 070
- US-A1- 2014 081 874

## Description

### TECHNICAL FIELD

The present invention relates to a card processing device that takes in a magnetic card and performs processing.

### BACKGROUND ART

An automated transaction device such as an automated transaction machine (ATM) is equipped with a card processing device that performs an information processing with respect to a magnetic card. The card processing device takes the magnetic card inserted from a card insertion port into a main body, reads magnetic information recorded on a magnetic stripe of the magnetic card with a magnetic head, and writes the information. Then, after the transaction ends, the magnetic card is ejected from an inside of the main body to the card insertion port.

There is a crime called skimming in which an illicit device with a magnetic head or a fake card insertion/ejection port equipped with a magnetic sensor is installed to cover a legitimate card insertion/ejection port of the ATM and illicitly acquire magnetic information of a magnetic card. The illicit device may be installed inside the main body of the card processing device.

The illicit device is attached at a position where the magnetic stripe of the card of the card processing device passes, and in a case where a user inserts the magnetic card from the insertion port of the card processing device, when the magnetic card passes through the illicit device, the illicit device can illicitly read the magnetic information recorded on the magnetic card.

As a measure to prevent skimming of the illicit device installed in front of the card insertion port, when the card is inserted into and ejected from the main body of the card processing device, that is, when a part of the card protrudes to the front of the card processing device, there are techniques for preventing the illicit device from reading the magnetic information of the magnetic card by repeating card conveyance, stop, or reverse conveyance (for example, Patent Documents 1 to 3).

### CITATION LIST

### PATENT DOCUMENT

Patent Document 1: US 6460771 B1
Patent Document 2: JP 2004-171205 A
Patent Document 3: JP 2001-22894 A
Patent Document 4: US 2007/057070 A1
Patent Document 5: US 2014/081874 A1
Patent Document 6: TW 200 915 234 A
Patent Document 7: EP 1 679 640 A1

### SUMMARY OF THE INVENTION

### PROBLEMS TO BE SOLVED BY THE INVENTION

In the case of illicitness measures described in Patent Documents 1, 2 and 3, it was necessary for the card to be conveyed at a constant speed after being taken into the main body of the card processing device in order to read and write the magnetic card with the magnetic head of the main body of the card processing device. However, in a case where the illicit device is mounted inside the main body of a card processing device such as a card conveyance path, these inventions have a problem that reading of magnetic card information of the illicit device cannot be prevented. Patent Document 4 shows a card reader for an automated banking machine. The card reader includes a processor and a card transport. The card transport moves at least one card a plurality of cycles between a first position and a second position within the card transport. The card transport continuously moves the card in a first direction for a first time period at a first speed, then continuously moves the card in the first direction for a second time period at a second speed which is slower than the first speed. Subsequent to the second time period, the card transport moves the card in the first direction for a third time period, during which the card stops and starts moving more than five times. Both the second and third time periods vary from cycle to cycle responsive to a variable parameter determined by the at least one processor. Patent Literature 5 shows an automated banking machine comprising a card reader. The card reader includes a movable read head that can read card data along a magnetic stripe of a card that was inserted long-edge first. The card reader includes a card entry gate. The gate is opened for a card that is determined to be properly oriented for data reading. The card reader can encrypt card data, including account data. Patent Literature 6 shows a card mechanism for preventing the fraudulent acquisition of data by skimming with a simple structure. A card mechanism for accepting the insertion of the card, and for processing the inserted card is provided with a card insertion port for accepting the insertion of the card and a conveyance path reaching from the card insertion port to the inside of the device, wherein a protrusion with which the card inserted from the card insertion port collides is provided inside the conveyance path.
Patent Literature 7 shows a card processing device that handles a magnetic card and an IC card wherein, when a card is taken into a main body and if the card is a magnetic card, the inserted card is taken in by intermittently transporting the card to a predetermined position and, after that, by continuously transporting the card and, if the card is an IC card, the inserted card is taken in by continuously transporting the card. When the card is ejected out of the main body and if the card is a magnetic card, the card is ejected by continuously transporting the card to a predetermined position and, after that, by intermittently transporting the card and, if the card is an IC card, the card is ejected by continuously transporting the card.

An object of the present invention is to provide a technique in which illicit information reading of a magnetic card of an illicit device mounted inside a main body such as a card conveyance path of a card processing device is prevented, and the card processing device itself reads and writes magnetic information of the magnetic card.

### SOLUTIONS TO PROBLEMS

The above problem is solved by the subject matter of the appended claim.

### EFFECTS OF THE INVENTION

The card processing device can read and write the card information of the magnetic card while obstructing the illicit device installed in the main body of the card processing device reading the magnetic information of the magnetic card.

### BRIEF DESCRIPTION OF THE DRAWINGS

Fig. 1 is a block diagram of an automated transaction device and a card processing device according to an embodiment of the present invention.
Fig. 2 is a schematic view of an internal configuration of a card processing device according to an embodiment of the present invention.
Fig. 3(a) is a flow chart illustrating an operation of a card processing device in a first embodiment of the present invention.
Fig. 3(b) is a flowchart illustrating the operation of the card processing device in the first embodiment of the present invention.
Fig. 4(a) is a flow chart illustrating an operation of a card processing device in a second embodiment of the present invention.
Fig. 4(b) is a flow chart illustrating the operation of the card processing device in the second embodiment of the present invention.
Fig. 5 is a table showing card conveyance speeds of the card processing device in the second embodiment of the present invention.

### MODE FOR CARRYING OUT THE INVENTION

Embodiments of the present invention will be described using the drawings.

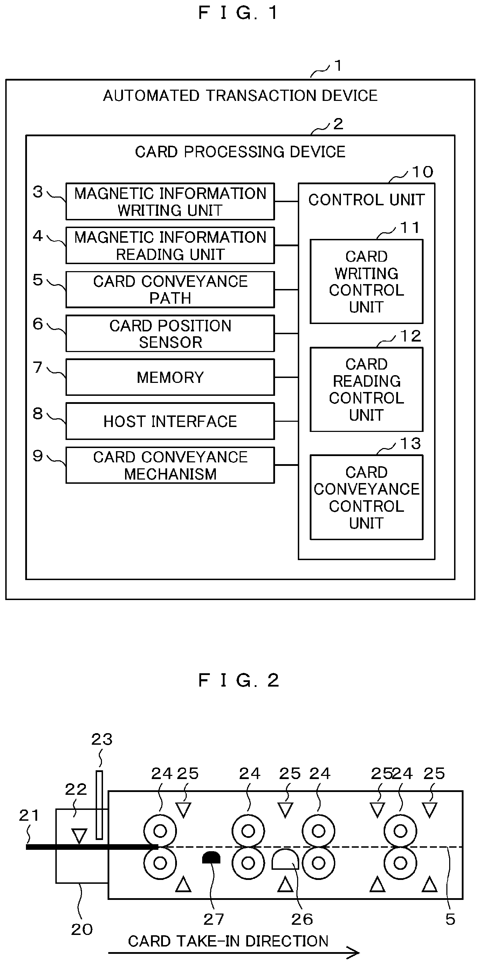

As illustrated in Fig. 1, a card processing device 2 according to an embodiment of the present invention is mounted on an automated transaction device 1. That is, an automated transaction device 1 includes a card processing device 2. The automated transaction device 1 is, for example, an automated transaction machine (ATM). The ATM includes, in addition to the card processing device 2, a bill processing unit and a coin processing unit for processing bills and coins, a customer operation unit by which a customer carries out transaction operations, and the like, which are omitted here.

The card processing device 2 includes a control unit 10, a magnetic information writing unit 3, a magnetic information reading unit 4, a card conveyance path 5, a card position sensor 6, a memory 7, a host interface 8, and a card conveyance mechanism 9.

The control unit 10 is a processing unit that controls an overall operation of the card processing device 2, and includes a card writing control unit 11, a card reading control unit 12, and a card conveyance control unit 13. The card conveyance control unit 13 controls the conveyance of the magnetic card.

The card conveyance path 5 is indicated by a broken line 5 in Fig. 2 described later, and is a path along which the magnetic card is conveyed. The card conveyance mechanism 9 is a mechanism for conveying the magnetic card inserted from an insertion port in the card conveyance path 5. The magnetic information reading unit 4 is disposed in the card conveyance path 5, and reads the magnetic information recorded on the magnetic card. The magnetic information writing unit 3 is disposed in the card conveyance path 5, and writes the magnetic information on the magnetic card.

The card position sensor 6 detects a position of the magnetic card conveyed on the card conveyance path 5. The memory 7 is a storage unit that stores various information as the control unit 10 needs. The host interface 8 is an interface that is connected to an entire device of the automated transaction device 1 (such as ATM) where the card processing device 2 is provided, and transmits/receives information for the card processing device 2 to cooperate with the entire device. For example, the magnetic information read from the magnetic card is notified to the automated transaction machine via the host interface 8.

Fig. 2 is a schematic view illustrating an internal configuration of a card processing device according to an embodiment of the present invention. In the card processing device 2 of this embodiment, an insertion port 20 for inserting a card 21 is provided in the front. The insertion port 20 has an insertion detection sensor 22 for detecting that the card 21 has been inserted. The insertion detection sensor 22 is a pressure sensor, and is disposed at a position to be pressed by the inserted card. Reference numeral 23 denotes a shutter, which controls an open/close state when the card is inserted or ejected.

Reference numeral 24 denotes a pair of conveyance rollers 24 for gripping and conveying cards, and the conveyance rollers are arranged in the card conveyance direction. In the present embodiment, four pairs of conveyance rollers 24 are provided. Each of the pairs of conveyance rollers 24 includes a conveyance roller to which a rotational force of a motor is transmitted, and the other is a driven roller that rotates following the conveyance roller. There is one motor that drives the conveyance roller.

The card conveyance control unit 13 controls a rotation (including a rotation direction and a rotation speed) and a stop of the motor. The card conveyance path 5 includes a sensor 25 for detecting presence or absence of the card. The sensor 25 is an optical sensor including a light emitting unit and a light receiving unit, and the light emitting unit and the light receiving unit are disposed to face each other with the conveyance path interposed therebetween.

Reference numeral 26 is a magnetic head that reads or writes magnetic information recorded on a magnetic stripe of the card conveyed into a main body of the card processing device 2. The magnetic head 26 is connected to a writing unit and a reading unit of card data.

An illicit device 27 is a small device attached near the card conveyance path in the main body of the card processing device 2 as illustrated in Fig. 2. The illicit device 27 is provided with a magnetic head, a memory and the like. In a case where the illicit device is attached, the magnetic information of the magnetic card 21 is illicitly read when the magnetic card 21 passes through the illicit device.

### First Embodiment

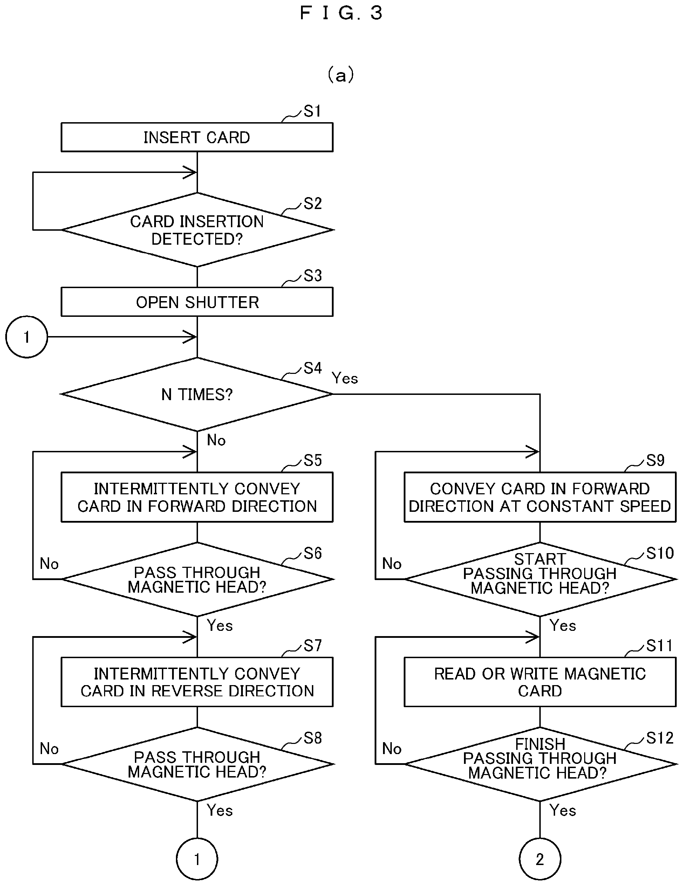

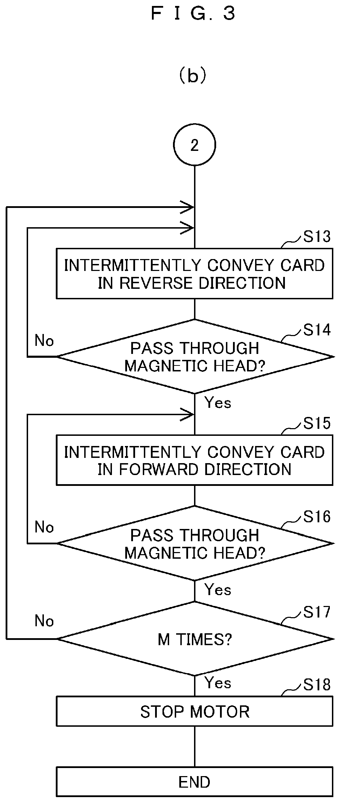

Hereinafter, an operation of the card processing device 2 of the present embodiment will be described. Fig. 3 is a flowchart of an operation of reading or writing card information of the magnetic card 21 while obstructing reading of card information of the illicit device 27 at the time of card insertion.

When the card is inserted into the card processing device 2 by a customer or the like (step S1), the card processing device 2 detects the insertion of the magnetic card 21 (step S2) and opens a shutter 23 (step S3). Whether the number of intermittent conveyance executed so far is less than a predetermined number (N times) or not is determined (step S4), and if the number is less than the predetermined number of times (in the case of No in step S4), the motor is rotated in a forward direction (a direction in which the magnetic card 21 is taken in from the insertion port 20) to intermittently convey the card in the forward direction (step S5).

Here, the "intermittent conveyance" refers to conveying the card while repeating driving and stopping the motor in the forward direction or driving the motor in reverse direction (a direction in which the magnetic card 21 is ejected from an inside of the device to the insertion port 20). Further, a conveyance performed at a predetermined constant speed is called a constant speed conveyance, compared to the intermittent conveyance.

The conveyance condition of the magnetic card 21 is monitored by the sensor 25, and when the magnetic card 21 passes through the magnetic head 26 (YES in step S6), the magnetic card 21 is intermittently conveyed in the reverse direction (step S7). The process returns to step S4 when the magnetic card 21 passes through the magnetic head 26 (Yes in step S8), the number of executions of a series of the intermittent conveyance processing in steps S5 to S8 performed so far is checked, and the above-mentioned process is repeatedly performed if the number is less than a predetermined number (No in step S4). The above-mentioned "the magnetic card 21 passes through the magnetic head 26" means that the magnetic card 21 is conveyed on the magnetic head 26 and a rear end of the card 21 in the conveyance direction exceeds a position of the magnetic head 26.

Here, when the intermittent conveyance process (referred to as the first intermittent conveyance process) defined in S5 to S8 exceeds the predetermined number of times (N times) (Yes in step S4), the magnetic card 21 is conveyed in the forward direction at a constant speed (step S9). When the magnetic card 21 starts passing through the magnetic head 26 (Yes in step S10), the magnetic information of the magnetic card is read or written until the magnetic card finish passing through the magnetic head 26 (steps S11 and S12).

Next, the card is intermittently conveyed in the reverse direction (step S13). After passing through the magnetic head 26 (Yes in step S14), the magnetic card 21 is intermittently conveyed until it passes through the magnetic head 26 again in the forward direction (steps S15 and S16). If the intermittent conveyance process (referred to as a second intermittent conveyance process) defined in the above-described steps S13 to S16 exceeds a predetermined number of times (M times) set in the card processing device 2 (Yes in step S17), the motor is stopped (step S18).

By performing the conveyance control as described above, the card processing device 2 checks the card position by the sensor 25 while driving the motor, whereby it is possible to read or write the magnetic information of the magnetic card 21 by the magnetic head 26 at the timing when the magnetic card 21 is not intermittently conveyed (steps S9 to S12). However, since the illicit device 27 cannot know the card position and the card conveyance direction, it cannot determine an appropriate timing for reading the magnetic card 21. Therefore, even when the card is being conveyed intermittently, the magnetic information of the magnetic card 21 is acquired, and correct magnetic information cannot be read.

In the above description, switching of the conveyance direction is performed immediately after the magnetic card 21 completely passes through the magnetic head, in both the first intermittent conveyance process and the second intermittent conveyance process, that is, although the conveyance direction is switched at the timing when the magnetic card 21 is intermittently conveyed a distance corresponding to an entire length of the magnetic card 21 in the conveyance direction with respect to the magnetic head 26 but is not limited thereto, and the conveyance direction may be switched at the timing when the magnetic card 21 is intermittently conveyed a distance longer than the entire length of the magnetic card or the conveyance direction may be switched at the timing when the magnetic card 21 is intermittently conveyed a distance shorter than the entire length of the magnetic card.

### Second Embodiment

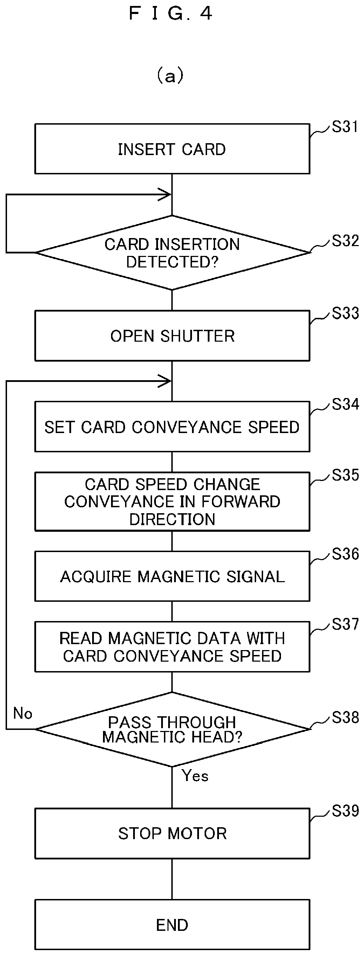

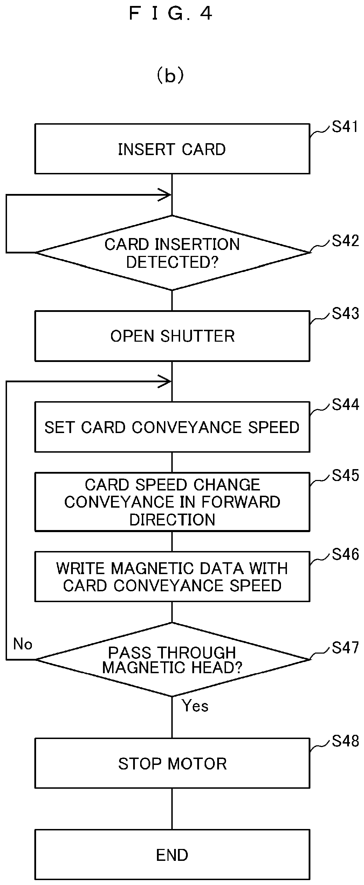

Hereinafter, an operation of the card processing device 2 of the present embodiment will be described. Fig. 4(a) is a flow chart for explaining a process in the second embodiment. As illustrated in Fig. 4, when detecting the insertion of the magnetic card 21 (steps S31 and S32), the card processing device 2 opens the shutter 23 (step S33), sets a card conveyance speed (step S34), and performs a speed change conveyance on the magnetic card in the forward direction (the direction in which the magnetic card 21 is taken in from the insertion port 20) (step S35).

That is, after the magnetic card 21 is taken into the card processing device 2, the card is not always conveyed at a constant speed, but the conveyance speed is changed little by little and conveyed. In particular, it is desirable to perform the speed change conveyance while the magnetic head 26 reads the magnetic card 21.

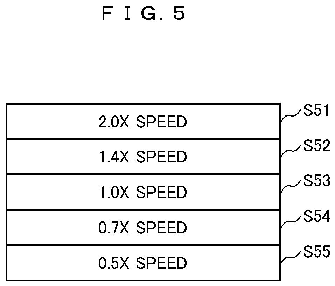

The card conveyance speed is set in a table, as shown in Fig. 5, so that 2.0x speed (S51), 1.4x speed (S52), 1.0x speed (S53), 0.7x speed (S54) and 0.5x speed (S55) may be selected, and the card is conveyed at the speed designated in the table. This is called a speed change conveyance.

For example, assuming that a period during which the magnetic head 26 reads the magnetic card 21 is T (sec), the card is conveyed at the 2.0x speed (S51) during the first T1 (sec), conveyed at the 1.4x speed (S52) during the subsequent T2 (sec), conveyed at the 1.0x speed (S53) during the subsequent T3 (sec), conveyed at the 0.7x speed (S54) during the subsequent T4 (sec), and conveyed at the 0.5x speed (S55) during the last T5 (sec) (T = T1 + T2 + T3 + T4 + T5). The table is not limited to the example shown in Fig. 5 and may be any value in the range of 0.5 to 2 times a normal constant speed.

Then, the card processing device 2 acquires a magnetic signal from the magnetic head 26 (step S36), converts the magnetic signal according to the card conveyance speed, and reads the converted magnetic signal into the magnetic information (step S37). After the card passes through the magnetic head 26 (step S38), the motor is stopped (step S39).

As described above, since the card conveyance speed is not constant at least while the magnetic head 26 reads the magnetic card 21, even if the illicit device 27 acquires magnetic data from the magnetic card 21, the illicit device 27 cannot recognize (decode) the acquired magnetic data as a significant signal. On the other hand, since the card processing device 2 sets the conveyance speed by itself, the card processing device 2 can obtain a correct data signal by performing decoding in consideration of the conveyance speed.

Writing to the magnetic card may also be realized in the same way. Fig. 4(b) is a flow in the case of writing the data to the magnetic card 21 by the speed change conveyance. When detecting the insertion of the magnetic card 21 (step S41), the card processing device 2 opens the shutter 23 (step S42), sets the card conveyance speed (step S44), and performs the speed change conveyance on the card in the forward direction (step S45). Then, the card processing device 2 writes the magnetic information from the magnetic head to the magnetic card 21 according to the card conveyance speed (step S46) . After the card passes through the magnetic head 26 (step S47), the motor is stopped (step S48).

Even in a case where the processes of the first embodiment and the second embodiment described above are performed independently of each other, it is possible to prevent illicit reading of the magnetic card data by the illicit device, but it is possible to more securely prevent the illicit reading of the magnetic card data by combining the respective embodiments.

### REFERENCE SIGNS LIST

- 1: Automated transaction device
- 2: Card processing device
- 3: Magnetic information writing unit
- 4: Magnetic information reading unit
- 5: Card conveyance path
- 6: Card position sensor
- 7: Memory
- 8: Host interface
- 9: Card conveyance mechanism
- 10: Control unit
- 11: Card writing control unit
- 12: Card reading control unit
- 13: Card conveyance control unit
- 21: Magnetic card
- 22: Insertion detection sensor
- 23: Shutter
- 24: Conveyance roller
- 25: Sensor
- 26: Magnetic head
- 27: Illicit device

## Claims

1. A card processing device (2) including an insertion/ejection port (20) through which a card (21) is inserted and ejected, a conveyance path (5) through which the inserted card (21) is conveyed to a predetermined position, a magnetic head (26) provided on the conveyance path (5) and reading magnetic information of the card (21) by conveying the card (21), and a control unit (10) which is configured to control the conveyance of the card (21) and the reading of the magnetic information,
wherein the control unit (10) is configured to read or write information of the card (21)
**characterized by** sequentially performing processings including:
a first intermittent conveyance processing in which the inserted card (21) is intermittently conveyed until the inserted card (21) passes through the magnetic head (26) and then the inserted card (21) is intermittently conveyed until the inserted card (21) passes through the magnetic head (26) in a direction towards the insertion port (20);
a magnetic data reading and writing processing in which the card (21) is conveyed at a constant speed from the insertion port (20) toward an inside of the card processing device (2) such that the magnetic head (26) reads or writes the magnetic information of the card (21); and
a second intermittent conveyance processing in which the card (21) is intermittently conveyed until the card (21) passes through the magnetic head (26) in a direction from the inside of the card processing device (2) toward the insertion port (20) and then the card (21) is intermittently conveyed until the card (21) passes through the magnetic head (26) in reverse direction.

2. The card processing device (2) according to claim 1, wherein each of the first intermittent conveyance processing and the second intermittent conveyance processing is performed one or more arbitrary times.

3. The card processing device (2) according to claim 1 or 2,
wherein switching of a conveyance direction in the first intermittent conveyance processing or the second intermittent conveyance process is performed at a timing when the card (21) is conveyed a distance shorter than an entire length of the card (21) in the conveyance direction.

4. The card processing device (2) according to claim 1 or 2,
wherein switching of a conveyance direction in the first intermittent conveyance processing or the second intermittent conveyance process is performed at a timing when the card (21) is conveyed a distance longer than an entire length of the card (21) in the conveyance direction.

5. The card processing device (2) according to any one of claims 1 to 4,
wherein in the magnetic data reading and writing processing, the card (21) is conveyed with at least two different speeds, wherein each speed is selected among a plurality of predetermined speeds, from the insertion port (20) toward the inside of the card processing device (2) such that the magnetic head (26) reads or writes the magnetic information of the card (21).

6. An automated transaction device (1) equipped with the card processing device (2) according to any one of claims 1 to 5.

## Patentansprüche

1. Kartenverarbeitungsvorrichtung (2), die einen Einführ-/Ausstoßschlitz (20), durch den eine Karte (21) eingeführt und ausgestoßen wird, einen Förderweg (5), durch den die eingeführte Karte (21) zu einer vorgegebenen Position befördert wird, einen Magnetkopf (26), der auf dem Förderweg (5) vorgesehen ist und Magnetinformationen der Karte (21) durch Befördern der Karte (21) liest, und eine Steuereinheit (10), die konfiguriert ist, die Beförderung der Karte (21) und das Lesen der Magnetinformationen zu steuern, enthält,
wobei die Steuereinheit (10) konfiguriert ist, Informationen der Karte (21) zu lesen oder zu schreiben,
**gekennzeichnet durch** das sequenzielle Ausführen von Verarbeitungen, die Folgendes enthalten:
eine erste intermittierende Beförderungsverarbeitung, in der die eingeführte Karte (21) intermittierend befördert wird, bis die eingeführte Karte (21) durch den Magnetkopf (26) läuft, und die eingeführte Karte dann intermittierend befördert wird, bis die eingeführte Karte (21) durch den Magnetkopf (26) in einer Richtung in Richtung des Einführschlitzes (20) läuft;
eine Magnetdatenlese- und Magnetdatenschreibverarbeitung, in der die Karte (21) mit einer konstanten Geschwindigkeit von dem Einführschlitz (20) in Richtung eines Inneren der Kartenverarbeitungsvorrichtung (2) befördert wird, so dass der Magnetkopf (26) die Magnetinformationen der Karte (21) liest oder schreibt; und
eine zweite intermittierende Beförderungsverarbeitung, in der die Karte (21) intermittierend befördert wird, bis die Karte (21) durch den Magnetkopf (26) in einer Richtung von dem Inneren der Kartenverarbeitungsvorrichtung (2) in Richtung des Einführschlitzes (20) läuft, und die Karte (21) dann intermittierend befördert wird, bis die Karte (21) durch den Magnetkopf (26) in der umgekehrten Richtung läuft.

2. Kartenverarbeitungsvorrichtung (2) nach Anspruch 1, wobei die erste intermittierende Beförderungsverarbeitung und die zweite intermittierende Beförderungsverarbeitung einmal oder mehrmals ausgeführt werden.

3. Kartenverarbeitungsvorrichtung (2) nach Anspruch 1 oder 2,
wobei das Wechseln einer Förderrichtung in der ersten intermittierenden Beförderungsverarbeitung oder der zweiten intermittierenden Beförderungsverarbeitung zu einem Zeitpunkt ausgeführt wird, zu dem die Karte (21) eine Strecke, die kürzer als eine Gesamtlänge der Karte (21) ist, in die Förderrichtung befördert wurde.

4. Kartenverarbeitungsvorrichtung (2) nach Anspruch 1 oder 2,
wobei das Wechseln einer Förderrichtung in der ersten intermittierenden Beförderungsverarbeitung oder der zweiten intermittierenden Beförderungsverarbeitung zu einem Zeitpunkt ausgeführt wird, zu dem die Karte (21) eine Strecke, die länger als eine Gesamtlänge der Karte (21) ist, in die Förderrichtung befördert wurde.

5. Kartenverarbeitungsvorrichtung (2) nach einem der Ansprüche 1 bis 4,
wobei in der Magnetdatenlese- und Magnetdatenschreibverarbeitung die Karte (21) von dem Einführschlitz (20) in Richtung des Inneren der Kartenverarbeitungsvorrichtung (2) mit mindestens zwei verschiedenen Geschwindigkeiten befördert wird, wobei jede Geschwindigkeit aus mehreren vorgegebenen Geschwindigkeiten ausgewählt ist, so dass der Magnetkopf (26) die Magnetinformationen der Karte (21) liest oder schreibt.

6. Automatisierte Transaktionsvorrichtung (1), die mit der Kartenverarbeitungsvorrichtung (2) nach einem der Ansprüche 1 bis 5 ausgestattet ist.

## Revendications

1. Dispositif de traitement de carte (2) incluant un orifice d'insertion/éjection (20) à travers lequel une carte (21) est insérée et éjectée, une voix de transport (5) à travers laquelle la carte insérée (21) est transportée à une position prédéterminée, une tête magnétique (26) prévue sur la voie de transport (5) et lisant des informations magnétiques de la carte (21) lors du transport de la carte (21), et une unité de commande (10) qui est configurée pour commander le transport de la carte (21) et la lecture des informations magnétiques,
dans lequel l'unité de commande (10) est configurée pour lire ou écrire des informations de la carte (21),
**caractérisé en ce qu'**il exécute séquentiellement des traitements incluant :
un premier traitement de transport intermittent dans lequel la carte insérée (21) est transportée par intermittence jusqu'à ce que la carte insérée (21) passe à travers la tête magnétique (26) et ensuite la carte insérée (21) est transportée par intermittence jusqu'à ce que la carte insérée (21) passe à travers la tête magnétique (26) dans une direction vers l'orifice d'insertion (20) ;
un traitement de lecture et d'écriture de données magnétiques dans lequel la carte (21) est transportée à une vitesse constante depuis l'orifice d'insertion (20) vers l'intérieur du dispositif de traitement de carte (2) de telle sorte que la tête magnétique (26) lit ou écrit les information magnétiques de la carte (21) ; et
un second traitement de transport intermittent dans lequel la carte (21) est transportée par intermittence jusqu'à ce que la carte (21) passe à travers la tête magnétique (26) dans une direction depuis l'intérieur du dispositif de traitement de carte (2) vers l'orifice d'insertion (20) et ensuite la carte (21) est transportée par intermittence jusqu'à ce que la carte (21) passe à travers la tête magnétique (26) dans une direction inverse.

2. Dispositif de traitement de carte (2) selon la revendication 1, dans lequel chacun du premier traitement de transport intermittent et du second traitement de transport intermittent est exécuté une ou plusieurs fois arbitrairement.

3. Dispositif de traitement de carte (2) selon la revendication 1 ou 2,
dans lequel une commutation d'une direction de transport dans le premier traitement de transport intermittent ou le second traitement de transport intermittent est exécutée à une temporisation à laquelle la carte (21) est transportée sur une distance plus courte que la longueur entière de la carte (21) dans la direction de transport.

4. Dispositif de traitement de carte (2) selon la revendication 1 ou 2,
dans lequel une commutation d'une direction de transport dans le premier traitement de transport intermittent ou le second traitement de transport intermittent est exécutée à une temporisation à laquelle la carte (21) est transportée sur une distance plus longue que la longueur entière de la carte (21) dans la direction de transport.

5. Dispositif de traitement de carte (2) selon l'une quelconque des revendications 1 à 4,
dans lequel, dans le traitement de lecture et d'écriture de données magnétiques, la carte (21) est transportée à au moins deux vitesses différentes, chaque vitesse étant sélectionnée parmi une pluralité de vitesses prédéterminées, depuis l'orifice d'insertion (20) vers l'intérieur du dispositif de traitement de carte (2) de telle sorte que la tête magnétique (26) lit ou écrit les informations magnétiques de la carte (21).

6. Dispositif de transaction automatisée (1) équipé du dispositif de traitement de carte (2) selon l'une quelconque des revendications 1 à 5.
